(19) **Europäisches Patentamt**

**European Patent Office**

**Office européen des brevets**

(11) **EP 1 000 652 A1**

(12) **DEMANDE DE BREVET EUROPEEN**

(43) Date de publication:
17.05.2000 Bulletin 2000/20

(51) Int. Cl.⁷: **B01D 53/04**, B01D 53/047

(21) Numéro de dépôt: **99402600.3**

(22) Date de dépôt: **20.10.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **09.11.1998 FR 9814069**

(71) Demandeur:
**L'AIR LIQUIDE, SOCIETE ANONYME POUR L'ETUDE ET L'EXPLOITATION DES PROCEDES GEORGES CLAUDE**
**75007 Paris (FR)**

(72) Inventeurs:
• **Rouge, Dominique**
**92240 Malakoff (FR)**
• **Teuscher, Nathalie**
**75010 Paris (FR)**

(74) Mandataire:
**Le Moenner, Gabriel et al**
**Societé l'Air Liquide**
**Service Brevets et Marques**
**75, Quai d'Orsay**
**75321 Paris Cédex 07 (FR)**

(54) **Unité PSA ou VSA à débit et pression de production conjointement régulés**

(57)    L'invention concerne un procédé de régulation d'une installation PSA, notamment VSA, de séparation d'un flux gazeux, en particulier d'un flux gazeux contenant de l'azote et au moins un composé gazeux moins polaire, notamment de l'oxygène et/ou de l'hydrogène. L'installation PSA fonctionne par cycle de production et comporte un ou plusieurs adsorbeurs, chaque cycle de production comprenant au moins une étape d'alimentation de durée d'alimentation (TA) comprenant une introduction du flux gazeux à séparer dans un adsorbeur; au moins une étape de production comprenant une récupération d'un flux de gaz produit à une pression de production (PP) préfixée et à un débit de production nominal (DN) préfixé; et au moins une étape de pompage de durée de pompage (TP) comprenant une extraction d'un flux gazeux d'au moins un adsorbeur. Selon ce procédé de régulation, on ajuste conjointement la durée totale d'alimentation (TA) et la durée totale de pompage (TP) pour maintenir, en aval de l'installation PSA, une pression de production (PP) constante et minimiser la consommation énergétique quel que soit le débit réel (DR) de production inférieur ou égal à un débit de production nominal (DN).

**Figure 1a**

**Description**

L'invention concerne un procédé de type PSA, et plus particulièrement de type VSA, de séparation d'un flux gazeux, en particulier d'un flux gazeux contenant essentiellement de l'oxygène et de l'azote, tel l'air, dont le débit de production et la pression de production sont variables et ajustables au cours du temps.

Les gaz de l'air, tels notamment l'oxygène et l'azote, présentent un grand intérêt industriel, notamment dans les domaines de la fabrication du papier ou du verre.

Une des techniques non-cryogéniques utilisées pour produire ces gaz est la technique dite "PSA" (pour Pressure Swing Adsorption), laquelle recouvre non seulement les procédés PSA proprement dits, mais aussi les procédés analogues, tels les procédés VSA (Vacuum Swing Adsorption) ou MPSA (Mixed Pressure Swing Adsorption).

Selon cette technique PSA, lorsque le mélange gazeux à séparer est l'air et que le composant à récupérer est l'oxygène, ledit oxygène est séparé dudit mélange gazeux grâce à une adsorption préférentielle d'au moins l'azote sur un matériau adsorbant préférentiellement au moins l'azote et soumis à des cycles de pression donnée dans la zone de séparation.

L'oxygène ne s'adsorbant pas ou peu est récupéré en sortie de ladite zone de séparation; celui-ci à une pureté, en général, supérieure à 90 %, voire à 93%.

Plus généralement, un procédé PSA pour la séparation non-cryogénique d'un mélange gazeux comprenant un premier composé s'adsorbant préférentiellement sur un matériau adsorbant et un deuxième composé s'adsorbant moins préférentiellement sur ledit matériau adsorbant que ledit premier composé, en vue de la production dudit deuxième composé, comprend de manière cyclique :

- une étape d'adsorption préférentielle d'au moins ledit premier composé sur ledit matériau adsorbant, à une pression d'adsorption dite "pression haute", avec récupération d'au moins une partie du deuxième composé ainsi produit;
- une étape de désorption du premier composé ainsi piégé par l'adsorbant, à une pression de désorption inférieure à la pression d'adsorption, dite "pression basse";
- une étape de recompression de la zone de séparation comprenant l'adsorbant, par passage de ladite pression basse à ladite pression haute.

Cependant, il est connu que l'efficacité de séparation d'un mélange gazeux, tel l'air, dépend de nombreux paramètres, notamment la pression haute, la pression basse, le type de matériau adsorbant utilisé et l'affinité de celui-ci pour les composés à séparer, la composition du mélange gazeux à séparer, la température d'adsorption du mélange à séparer, la taille des particules d'adsorbant, la composition de ces particules et le gradient de température s'établissant à l'intérieur du lit d'adsorbant.

Actuellement, les zéolites sont les adsorbants les plus utilisés dans les procédés PSA. Les particules zéolitiques contiennent habituellement des cations métalliques mono, di et/ou trivalents, par exemples des cations de métaux alcalins, alcalino-terreux, de métaux de transition et/ou lanthanides, incorporés lors de la synthèse des particules de zéolite et/ou insérés subséquemment par une technique d'échange d'ions, c'est-à-dire, en général, par mise en contact des particules de zéolite non-échangées ou zéolite brute avec une solution d'un ou plusieurs sels métalliques comprenant le ou les cations à incorporer dans la structure zéolitique et récupération subséquente des particules de zéolite échangée, c'est-à-dire de zéolite contenant une quantité donnée de cations métalliques. A titre d'exemple, on peut citer les zéolites de type X ou LSX (Low Silica X) contenant plus de 80%, voire plus de 90% de cations métalliques, tels notamment les cations lithium, calcium et/ou zinc.

De telles zéolites sont notamment décrites dans les documents EP-A-486384, EP-A-606848, EP-A-589391, EP-A-589406, EP-A-548755. EP-A-109063 et EP-A-760248.

Cependant, une préoccupation récurrente de la production de gaz par procédé PSA, en particulier par procédé VSA, est de pouvoir proposer au client ou au site utilisateur du gaz produit, tel un four de combustion par exemple, différentes combinaisons de débit et de pression de production en fonction des exigences et/ou des besoins propres de ce client ou de ce site utilisateur et ce, à partir d'un équipement ou d'une unité PSA, en particulier VSA, standard installée sur le site.

En d'autres termes, d'être en mesure, à partir du point de fonctionnement nominal choisi de l'unité PSA, de s'adapter au mieux aux fluctuations de demande du client ou du site utilisateur, de manière à garantir des performances et un coût de production acceptables d'un point de vue industriel malgré lesdites fluctuations de demande.

Pour ce faire, il est d'usage de procéder à une régulation de l'unité PSA ou VSA de manière à pouvoir obtenir les combinaisons de débit et de pression de production souhaitées par le client.

L'état de l'art recèle de nombreux renseignements sur la régulation des procédés PSA, en particulier VSA, permettant de répondre, à unité industrielle donnée, aux changements de consommation de gaz de production, sans affecter outre mesure la consommation énergétique globale dudit procédé.

Ainsi, un premier type de contrôle connu est basé sur l'introduction d'un temps mort de durée variable ou non dans le cycle de production, ainsi que décrit notamment dans les documents EP-A-458350 et EP-A-819463.

Durant ce temps mort, les adsorbeurs sont isolés et les machines fonctionnent à vide, et l'objectif visé est alors l'amélioration de la consommation énergétique qui, en l'absence de ce temps mort, serait dégradée en proportion directe de la réduction de débit consommé.

Toutefois, il s'avère que ce type de régulation ne permet de limiter que très partiellement la dégradation d'énergie spécifique durant la marche réduite de l'unité PSA, en particulier VSA. Ainsi, pour une production de 50% du débit nominal d'une unité VSA, l'énergie spécifique subit une dégradation de plus 30% par rapport à la valeur nominale.

En outre, pour les procédés à production discontinue, notamment dans le cas d'une unité VSA à un ou deux adsorbeurs, on assiste obligatoirement à une diminution de la pression du gaz de production en sortie du VSA, qui doit être compensée par une compression supplémentaire en aval de l'unité.

En d'autres termes, la variation de pression DP dans la capacité de production est, pour les unités à production discontinue, par exemple de type MPSA, telle que :

$$DP \; = \; \frac{DP_0 \, . \, (T_c\text{-}d) \, . \, (T_c\text{+}Y)}{(T_c) \, . \, (T_c\text{-}d\text{+}Y)}$$

où :

$DP_0$ : est la différence entre les pressions extrêmes en marche nominale,
$T_c$ : est la durée ou temps de cycle (en secondes),
d : est la durée (en secondes) pendant laquelle il n'y a pas production, et
Y : est la durée (en secondes) du temps mort de marche réduite.

Autrement dit, dans la plupart des cas, ce type de contrôle avec introduction de temps mort ne peut pas suffire à maintenir, à lui seul, un service parfaitement constant, notamment pour des pureté et pression de l'oxygène produit fixées et quel que soit le débit consommé, et suppose alors de mettre en oeuvre une deuxième régulation en aval de l'unité PSA ou VSA, par exemple au moyen d'un compresseur.

Une solution alternative réside dans la diminution du taux d'alimentation de l'unité PSA ou VSA, c'est-à-dire dans la diminution de la quantité de matière injectée dans le système en phase d'adsorption du lit de tamis.

Cela peut se faire soit par modification de la durée d'alimentation, comme décrit par les documents FR 9716066 ou US-A-4,539,019, soit par ajustement de l'ouverture d'une vanne de recompression de l'adsorbeur comme préconisé par le document US-A-5,258,056.

Bien que celle solution soit bien souvent préférable à la précédente en termes de consommation énergétique étant donné qu'elle permet, dans certains cas, de conserver une énergie spécifique constante jusqu'à 85% du débit nominal comme décrit par FR 9716066, elle présente notamment le désavantage de conduire à une diminution obligatoire de la pression du gaz de production puisque la pression haute du cycle de pression est nécessairement abaissée.

De plus, à l'instar du premier mode de régulation, cette deuxième solution ne peut suffire à maintenir un service constant. En effet, il a été constaté, qu'une marche réduite, par exemple, à 85% du débit nominal entraîne une chute de pression de production de 12 000 Pa.

D'autres documents préconisent, à l'inverse, de contrôler spécifiquement la pression basse par modification des flux gazeux lors du cycle. A ce titre, on peut citer le document EP-A-0 689 862.

Toutefois, cette dernière solution est assez complexe à mettre en oeuvre et nécessite souvent des moyens de contrôle supplémentaires, en comparaison des variantes précédentes, et engendre, par ailleurs, pour les unités à machines volumétriques, une modification de la pression haute du cycle et donc de la pression de production.

En outre, il apparaît qu'aucun système ou procédé de contrôle d'unité PSA ou VSA permettant d'ajuster marginalement la pression du gaz délivré, soit pour suivre une fluctuation occasionnelle des besoins du client ou du site consommateur, soit pour répondre à différentes exigences de pression minimale de production, par exemple pour différentes applications du gaz ainsi produit, avec une seule gamme d'unités standard, n'a été décrit jusqu'à présent.

La présente invention entend alors proposer un mode de régulation plus fin des unités PSA, en particulier VSA, quelles qu'elles soient, c'est-à-dire à un ou plusieurs adsorbeurs, lorsque changent les besoins du client ou du site consommateur de gaz produit en termes de débit et/ou de pression.

En particulier, la présente invention vise à permettre une régulation de l'unité PSA ou VSA autorisant des marches réduites à énergie spécifique optimisée sans modification de la pression de production, c'est-à-dire sans contrôle débit/pression redondant en aval de ladite unité PSA ou VSA.

La présente invention concerne alors un procédé de régulation d'une installation PSA de séparation d'un flux gazeux fonctionnant par cycle de production et comportant au moins un adsorbeur, chaque cycle de production comprenant les étapes suivantes :

- au moins une étape d'alimentation de durée d'alimentation (TA) comprenant au moins une introduction du flux gazeux à séparer dans au moins un adsorbeur,
- au moins une étape de production comprenant au moins une récupération d'un flux de gaz produit à une pression de production (PP) préfixée et à un débit de production nominal (DN) préfixé, et
- au moins une étape de pompage de durée de pompage (TP) comprenant au moins une extraction d'un flux gazeux d'au moins un adsorbeur, et dans lequel on ajuste conjointement la durée d'alimentation (TA) et la durée de pompage (TP) pour maintenir, en aval de l'installation PSA, une pression de production (PP) approximativement constante et minimiser ainsi la consommation énergétique, pour au moins un débit réel (DR) de production inférieur ou égal à un débit de production nominal (DN), de préférence pour tout débit réel (DR) de production inférieur ou égal à un débit de production nominal (DN).

Par pression de production (PP) en aval de l'installation PSA, on entend la pression minimale obtenue soit directement en sortie dudit au moins un adsorbeur, soit en sortie d'au moins une capacité tampon dé production située en aval et reliée audit au moins un adsorbeur.

En d'autres termes, la présente invention concerne un procédé de contrôle d'une installation PSA ou VSA, dans lequel on opère une régulation conjointe des durées effectives d'alimentation (TA) et de pompage (TP) basée sur:

- d'une part, un réglage des durées nominales $TA_0$ et $TP_0$ de façon à obtenir une combinaison débit/pression/pureté de production de consigne ; et
- d'autre part, une régulation du couple TA et TP de façon à maintenir, en particulier dans les meilleures conditions économiques, le couple pureté/pression pour tout débit de gaz consommé ou débit réel (DR) inférieur ou égal à un débit de gaz nominal (DN).

Dans le cadre de l'invention, on appelle :

- TA : la durée d'alimentation, c'est-à-dire la durée pendant laquelle le mélange gazeux à traiter est mis en contact avec un lit d'adsorbant ;
- TB : la durée de pompage, c'est-à-dire la durée pendant laquelle le gaz résiduaire est évacué du lit d'adsorbant ;
- DN : le débit nominal de l'unité ;
- PP : la pression minimale du gaz de production ;
- PG : la pureté du gaz de production ;
- les indices 0 indiquent les valeurs prises par ces variables dans les conditions initiales de réglage de l'unité PSA.

Dans le cadre de l'invention, le réglage du fonctionnement initial de l'unité PSA, c'est-à-dire du couple ($TA_0$ ;$TP_0$), est réalisé au moment de la mise en service de l'unité.

Pour les unités à un seul adsorbeur, le réglage des durées d'étape d'alimentation et de pompage peut se faire indépendamment.

En revanche, pour les installations PSA à au moins deux adsorbeurs, qui doivent observer une certaine concordance d'étapes, il peut être nécessaire d'insérer, dans l'une ou l'autre des étapes d'alimentation ou de pompage, un temps mort spécifique, qui modifie alors la durée effective de l'étape.

Selon le cas, le procédé de l'invention peut inclure l'une ou plusieurs des caractéristiques suivantes :

- la durée effective d'alimentation (TA) est régulée en fonction de la pression de production (PP) réelle et le rapport (TP/TA) de la durée effective de pompage à la durée effective d'alimentation est régulé en fonction du rapport (DR/DN) du débit réel de production au débit nominal de production.
- la durée effective de pompage (TP) est, en outre, régulée de manière à maintenir une pureté de consigne (PG) du gaz produit.
- durant l'étape d'alimentation de durée initiale d'alimentation ($TA_0$), on introduit au moins un premier temps mort d'une durée de premier temps mort (X), telle que la durée effective (TA) d'alimentation est égale à $TA_0 - X$.
- durant l'étape de pompage de durée initiale de pompage ($TP_0$), on introduit au moins un deuxième temps mort d'une durée de deuxième temps mort (Y), telle que la durée effective (TP) de pompage est égale à $TP_0 - Y$.
- un troisième temps mort ayant une durée (Z) de troisième temps mort est éventuellement introduit au sein de chaque cycle.

- la durée d'alimentation (TA) est comprise entre 5 et 60 sec, de préférence entre 10 et 40 sec.
- la durée de pompage (TP) est comprise entre 5 et 60 sec, de préférence entre 10 et 40 sec.
- la pression de production (PP) préfixée est comprise entre $10^5$ et $10^7$ Pa, de préférence entre $10^5$ et $10^6$ Pa.
- le flux gazeux à séparer comprend de l'azote et au moins un composé gazeux moins polaire, notamment de l'oxygène et/ou de l'hydrogène, et, de préférence le flux gazeux est de l'air, le premier composé gazeux étant l'azote et le deuxième composé gazeux étant l'oxygène, l'air étant, dans le cadre de la présente invention, l'air contenu à l'intérieur d'un bâtiment ou d'une enceinte chauffée ou non, ou l'air extérieur, c'est-à-dire dans les conditions atmosphériques, pris tel quel ou éventuellement prétraité.
- le premier composé gazeux est l'azote et le deuxième composé gazeux est l'oxygène; et on produit un flux gazeux riche en oxygène, c'est-à-dire comprenant, en général, au moins 90% d'oxygène.
- la pression haute d'adsorption est comprise entre $10^5$ Pa et $10^7$ Pa, de préférence, de l'ordre de $10^5$ Pa à $10^6$ Pa, et/ou la pression basse de désorption est comprise entre $10^4$ Pa et $10^6$ Pa, de préférence, de l'ordre de $10^4$ Pa à $10^5$ Pa.
- la température d'alimentation est comprise entre 10°C et 80°C, de préférence entre 25°C et 60°C.

De préférence, l'unité PSA comporte de 1 à 3 adsorbeurs et/ou est à circulation radiale et/ou est de type VSA (Vacuum Swing Adsorption) et/ou met en oeuvre un ou plusieurs adsorbants, par exemple un procédé multilits.

L'invention va maintenant être décrite plus en détail à l'aide d'exemples donnés à titre illustratif, mais non limitatif, en référence aux figures annexées.

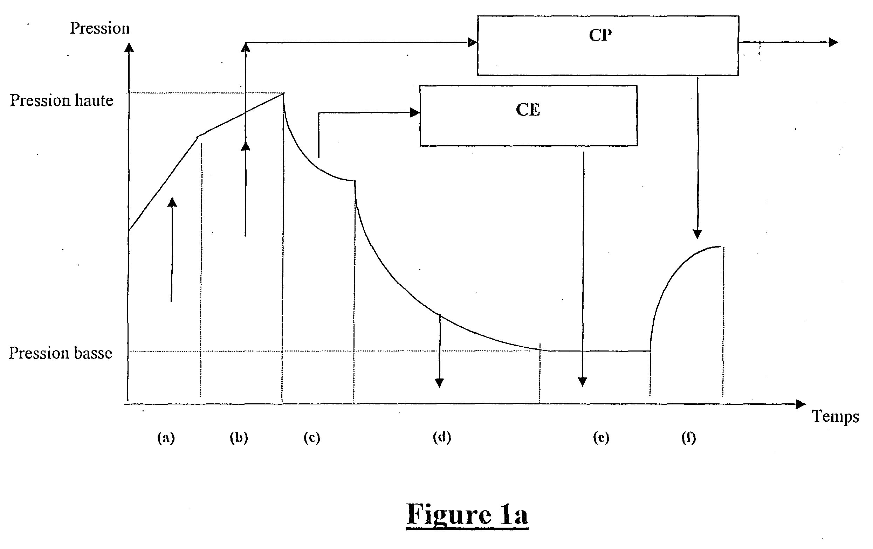

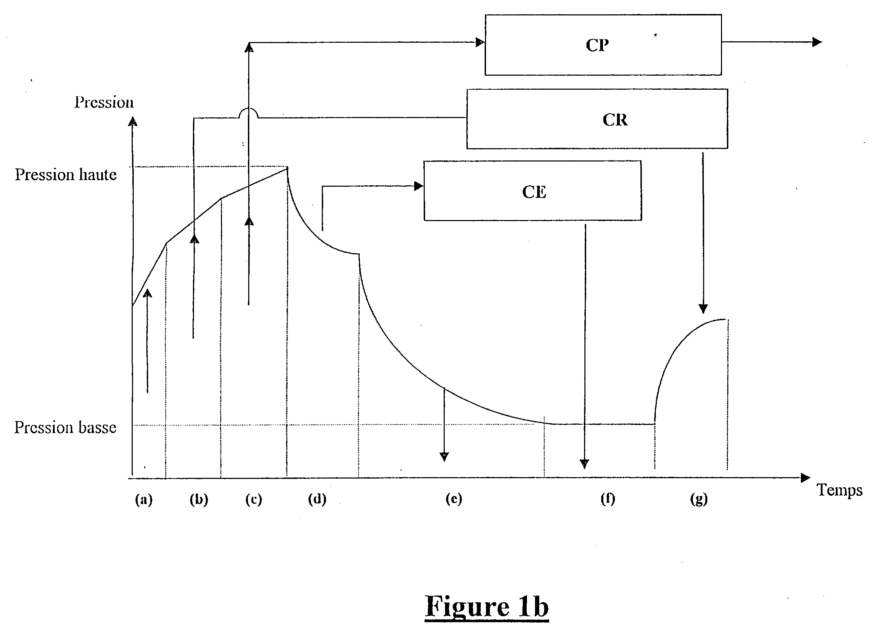

Les figures 1a et 1b représentent des schémas de fonctionnement d'une unité PSA comprenant un seul adsorbeur, ou unité monoadsorbeur, utilisée pour produire de l'oxygène à partir d'air par adsorption préférentielle des molécules d'azote sur un adsorbant adéquat, par exemple une zéolite de type faujasite échangée à au moins 86% par des cations lithium ou calcium.

Cette unité monoadsorbeur est une unité VSA de type standard dimensionnée de façon à observer, selon les besoins, le cycle de fonctionnement présenté en Figure 1a ou le cycle représenté en figure 1b.

Plus précisément, le cycle de la Figure 1a comporte schématiquement les étapes suivantes :

- une étape (a) d'alimentation seule;
- une étape (b) d'alimentation avec production simultanée, vers une capacité de production CP,
- une étape (c) d'équilibrage co-courant, vers une capacité d'équilibrage CE ;
- une étape (d) de pompage ;
- une étape (e) d'élution, c'est-à-dire de soutirage de gaz par l'entrée du lit d'adsorbant avec introduction simultanée à contre-courant du gaz d'équilibrage, en provenance de la capacité d'équilibrage CE ;
- une étape (f) de recompression contre-courant par du gaz de production, en provenance de la capacité de production CP.

La durée effective d'alimentation (TA) est la somme des durées des deux premières étapes. La durée effective de pompage (TP) est la durée de la quatrième étape ou la somme des durées des quatrième et cinquième étapes.

En outre, le cycle de fonctionnement présenté en Figure 1b comporte, quant à lui, schématiquement les étapes suivantes :

- une étape (a) d'alimentation seule;
- une étape (b) d'alimentation avec récupération simultanée du composant le moins facilement adsorbé en sortie de lit, orienté vers une capacité de recompression CR,
- une étape (c) d'alimentation avec production simultanée, vers une capacité de production CP,
- une étape (d) d'équilibrage co-courant, vers une capacité d'équilibrage CE ;
- une étape (e) de pompage ;
- une étape (f) d'élution, c'est-à-dire de soutirage de gaz par l'entrée du lit d'adsorbant avec introduction simultanée à contre-courant du gaz d'équilibrage, en provenance de la capacité d'équilibrage CE ;
- une étape (g) de recompression contre-courant par du gaz de recompression, en provenance de la capacité de recompression CR.

La durée effective d'alimentation (TA) est la somme des durées des trois premières étapes. La durée effective de pompage (TP) est la durée de la cinquième étape ou la somme des durées des cinquième et sixième étapes.

En fait, pour une unité VSA standard, le fonctionnement standard de l'unité VSA repose sur le choix, au moment du dimensionnement, de pressions et de durées standard d'étapes, ainsi que d'un volume donné de capacité de production.

De là, le fonctionnement standard de l'unité VSA peut être modifié subséquemment pour atteindre d'autres spécifications ou contraintes, notamment de production, de pression de production ou d'énergie spécifique, et ce, par simple ajustement du couple TA/TP.

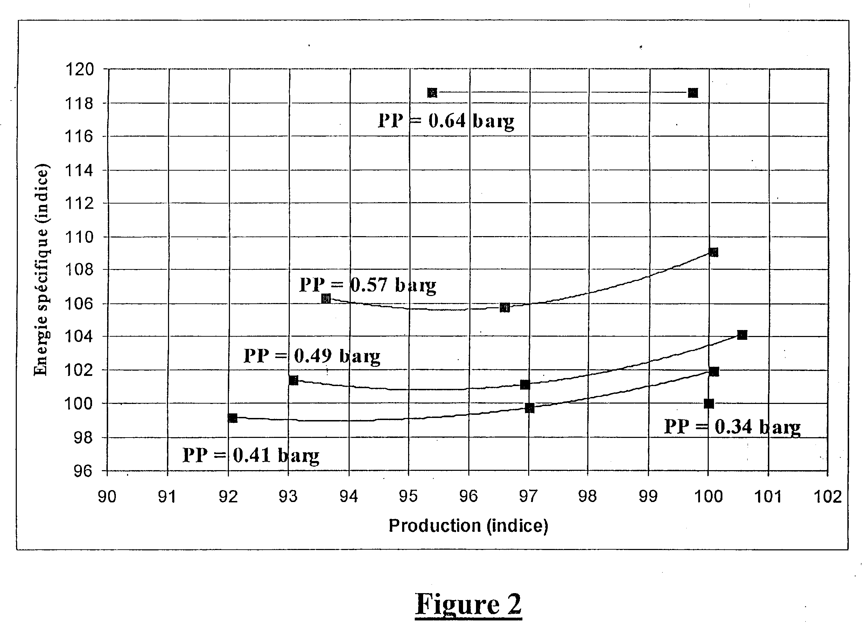

Ainsi, la figure 2 montre ce qu'il est possible d'atteindre en jouant sur un couple TA/TP donné.

Plus précisément, la figure 2 schématise l'impact du réglage de la pression minimale de production sur les performances de l'unité VSA

Ainsi, si le fonctionnement standard de l'unité VSA donne (100 ; 100 ; 100) pour la combinaison (production ; pression de production ; énergie spécifique), on peut régler sur site l'unité VSA, de façon à obtenir (97 ; 111 ; 101), qui est une combinaison peut être plus adaptée économiquement à un environnement spécifique.

Dès lors, les valeurs $TA_0$ et $TP_0$ obtenues pour cette dernière combinaison peuvent être figées et enregistrées en tant que valeurs initiales par des moyens de contrôle de l'installation, par exemple un automate ou une commande numérique de l'unité VSA..

De même, les débit et pression ainsi réglés peuvent être désormais les débit et pression initiaux $DN_0$ et $PP_0$ de l'unité VSA.

Sur la base de ce fonctionnement initial spécifique, il s'agit alors de s'adapter au mieux, en particulier économiquement, aux variations de demande du client.

Pour ce faire, l'installation VSA doit alors être soumise à une régulation, par exemple être régulée comme suit:

- la durée effective d'alimentation TA est régulée sur la consigne de pression de production $PP_0$, par exemple à l'aide d'une fonction de régulation linéaire du type :

$$TA_n = TA_{n-1} \times \left(1 + \alpha \times 1 - \left(\frac{PP_n}{PP_0}\right)\right)$$

où : a > 0 ; n est le numéro d'un cycle donné et n-1 est le numéro du cycle précédant ledit cycle donné n.

- un temps mort X, de durée $TA_0$-TA est introduit dans l'étape d'alimentation initiale de durée $TA_0$.
- le rapport TP/TA est régulé par une fonction de $DR/DN_0$, déterminée par expérience ou par simulation.

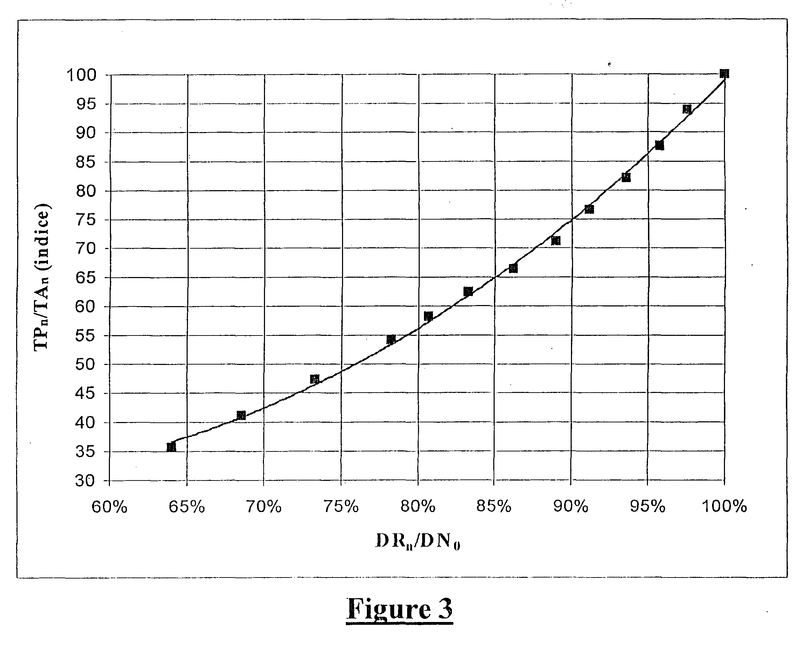

Ainsi, la courbe de la figure 3 présente la forme de cette fonction dans le cas d'une unité monoadsorbeur de production d'oxygène.

Il est à noter que cette fonction peut facilement être approchée par une fonction linéaire f et corrigée marginalement en fonction de l'écart à la pureté de consigne. On a ainsi, par exemple :

$$\frac{TP_n}{TA_n} = \frac{TP_{n-1}}{TA_{n-1}} \times \frac{f\left(\frac{DR_n}{DN_0}\right)}{f\left(\frac{DR_{n-1}}{DN_0}\right)} \times \left(1 + b \times \left(1 - \frac{PG_n}{PG_0}\right)\right)$$

avec b >0 et n numéro du cycle

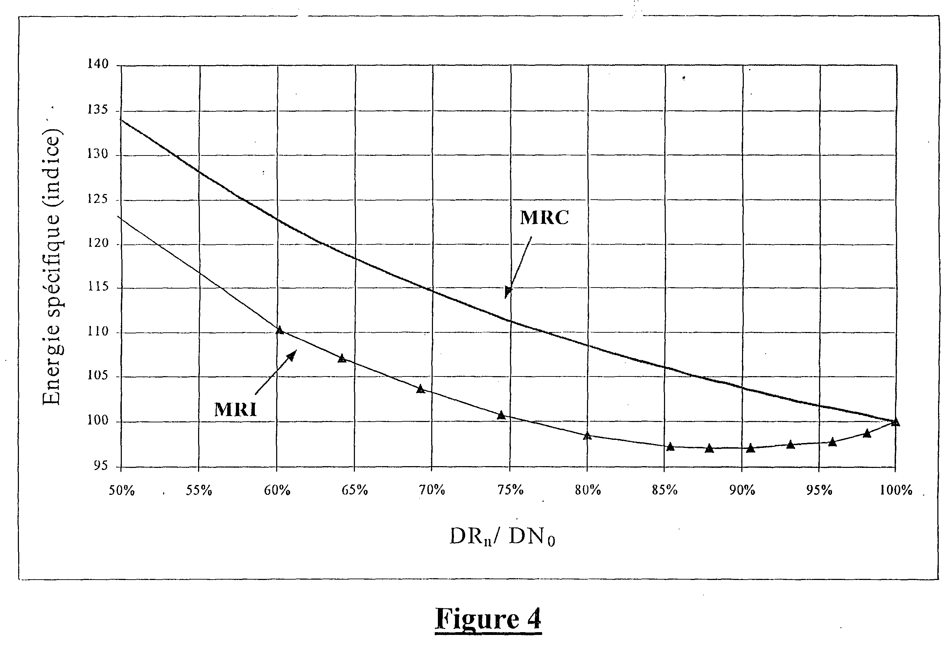

Ce type de régulation permet de maintenir la pression de production et d'optimiser la consommation énergétique en marche réduite, ainsi que représenté sur la figure 4 qui représente l'évolution de l'énergie spécifique durant une marche réduite de l'unité VSA.

Comme on peut le voir sur la figure 4, outre le maintien de la pression du gaz de production, la marche réduite selon l'invention (MRI) permet de maintenir l'énergie spécifique constante sur une large plage de débits consommés et d'économiser plus de 20% d'énergie spécifique par rapport à une marche réduite classique (MRC), qui ne mettrait en oeuvre que le simple ajout d'un temps mort supplémentaire dans le cycle de fonctionnement.

Il est à noter cependant qu'il existe un seuil de débit en deçà duquel la variation instantanée d'énergie spécifique en fonction du débit devient plus intéressante avec une marche réduite de type classique.

Il peut donc être intéressant de réaliser un mélange des deux régulations, à savoir, d'abord, une régulation classique jusqu'à un seuil prédéterminé, par exemple ici aux alentours de 70% du débit nominal, puis, sur la base de ce seuil, l'introduction d'un temps mort supplémentaire selon la présente invention.

La présente invention n'est pas limitée au domaine de la production d'oxygène à partir d'air et peut donc, dès lors, être appliquée à la séparation d'autres flux gazeux, tels notamment à des flux contenant de l'hydrogène, du dioxyde de carbone et/ou du monoxyde de carbone, en particulier à la production de gaz de synthèse ou "syngaz".

## Revendications

1. Procédé de régulation d'une installation PSA de séparation d'un flux gazeux fonctionnant par cycle de production et comportant au moins un adsorbeur, chaque cycle de production comprenant les étapes suivantes :

   - au moins une étape d'alimentation de durée d'alimentation (TA) comprenant au moins une introduction du flux gazeux à séparer dans au moins un adsorbeur,
   - au moins une étape de production comprenant au moins une récupération d'un flux de gaz produit à une pression de production (PP) préfixée et à un débit de production nominal (DN) préfixé, et
   - au moins une étape de pompage de durée de pompage (TP) comprenant au moins une extraction d'un flux gazeux d'au moins un adsorbeur, et dans lequel on ajuste conjointement la durée d'alimentation (TA) et la durée de pompage (TP) pour maintenir, en aval de ladite installation PSA, une pression de production (PP) approximativement constante pour au moins un débit réel (DR) de production, inférieur ou égal à un débit de production nominal (DN).

2. Procédé selon la revendication 1, caractérisé en ce que la durée effective d'alimentation (TA) est régulée en fonction de la pression de production (PP) réelle et en ce que le rapport (TP/TA) de la durée effective de pompage à la durée effective d'alimentation est régulé en fonction du rapport (DR/DN) du débit réel de production au débit nominal de production.

3. Procédé selon la revendication 1, caractérisé en ce que la durée effective de pompage (TP) est, en outre, régulée de manière à maintenir une pureté de consigne (PG) du gaz produit.

4. Procédé selon l'une des revendications 1 à 3, caractérisé en ce que, durant l'étape d'alimentation de durée initiale d'alimentation ($TA_0$), on introduit au moins un premier temps mort d'une durée de premier temps mort (X), telle que la durée effective (TA) d'alimentation est égale à $TA_0$ - X.

5. Procédé selon l'une des revendications 1 à 4, caractérisé en ce que, durant l'étape de pompage de durée initiale de pompage ($TP_0$), on introduit au moins un deuxième temps mort d'une durée de deuxième temps mort (Y), telle que la durée effective (TP) de pompage est égale à $TP_0$ - Y.

6. Procédé selon l'une des revendications 1 à 5, caractérisé en ce qu'au moins un troisième temps mort ayant une durée (Z) de troisième temps mort est introduit au sein de chaque cycle.

7. Procédé selon l'une des revendications 1 à 6, caractérisé en ce qu'il comporte de 1 à 3 adsorbeurs, de préférence à circulation radiale.

8. Procédé selon l'une des revendications 1 à 7, caractérisé en ce que l'installation est de type VSA.

9. Procédé selon l'une des revendications 1 à 8, caractérisé en ce que, pour chaque cycle de production :

   - la durée d'alimentation (TA) est comprise entre 5 et 60 sec, de préférence entre 10 et 40 sec et/ou la durée de pompage (TP) est comprise entre 5 et 60 sec, de préférence entre 10 et 40 sec et/ou la pression de production (PP) préfixée est comprise entre $10^5$ et $10^7$ Pa, de préférence entre $10^5$ et $10^6$ Pa.

10. Procédé selon l'une des revendications 1 à 9, caractérisé en ce que le flux gazeux à séparer comprend de l'azote et au moins un composé gazeux moins polaire, notamment de l'oxygène et/ou de l'hydrogène.

**Figure 1a**

EP 1 000 652 A1

Figure 1b

**Figure 2**

**Figure 3**

**Figure 4**

**Office européen des brevets**

## RAPPORT DE RECHERCHE EUROPEENNE

Numéro de la demande

EP 99 40 2600

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl7) |
|---|---|---|---|
| A | EP 0 821 992 A (L'AIR LIQUIDE) 4 février 1998 (1998-02-04) * le document en entier * ——— | 1-10 | B01D53/04 B01D53/047 |
| A | EP 0 375 220 A (PALL CORPORATION) 27 juin 1990 (1990-06-27) ——— | | |
| A | GB 2 259 871 A (THE BOC GROUP) 31 mars 1993 (1993-03-31) ——— | | |

| DOMAINES TECHNIQUES RECHERCHES (Int.Cl7) |
|---|
| B01D |

Le présent rapport a été établi pour toutes les revendications

| Lieu de la recherche | Date d'achèvement de la recherche | Examinateur |
|---|---|---|
| LA HAYE | 10 février 2000 | Bogaerts, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 1 000 652 A1

ANNEXE AU RAPPORT DE RECHERCHE EUROPEENNE
RELATIF A LA DEMANDE DE BREVET EUROPEEN NO.

EP 99 40 2600

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-02-2000

| Document brevet cité au rapport de recherche | Date de publication | Membre(s) de la famille de brevet(s) | | Date de publication |
|---|---|---|---|---|
| EP 821992 A | 04-02-1998 | FR | 2751892 A | 06-02-1998 |
| | | JP | 10174832 A | 30-06-1998 |
| | | US | 5876485 A | 02-03-1999 |
| EP 375220 A | 27-06-1990 | US | 4927434 A | 22-05-1990 |
| | | DE | 68923773 D | 14-09-1995 |
| | | DE | 68923773 T | 14-12-1995 |
| | | ES | 2075064 T | 01-10-1995 |
| | | GB | 2225964 A,B | 20-06-1990 |
| GB 2259871 A | 31-03-1993 | US | 5258056 A | 02-11-1993 |
| | | AU | 659185 B | 11-05-1995 |
| | | AU | 2137392 A | 01-04-1993 |
| | | CA | 2074644 A | 28-03-1993 |
| | | JP | 5228324 A | 07-09-1993 |
| | | ZA | 9206502 A | 03-05-1993 |

Pour tout renseignement concernant cette annexe : voir Journal Officiel de l'Office européen des brevets, No.12/82

14